# EUROPEAN PATENT SPECIFICATION

(11) **EP 2 199 196 B1**
(45) Date of publication and mention of the grant of the patent: **26.01.2011**
(21) Application number: 09173222.2
(22) Date of filing: 16.10.2009
(51) Int. Cl.: B62K 11/00, B62K 21/00

(54) **Fastening device for ignition switch lock**
Befestigungsvorrichtung für eine Zündschaltsperre
Dispositif de fixation pour verrouillage de commutation d'allumage

(30) Priority: 22.12.2008 TW 97149972
(43) Date of publication of application: 23.06.2010
(73) Proprietor: Kwang Yang Motor Co., Ltd., Kaohsiung City (TW)
(72) Inventor: Tsai, Feng-Chih, Kaohsiung County (TW)
(74) Representative: Dossmann, Gérard

(56) References cited:
- EP-A2- 1 524 177
- DE-U1-202004 017 996
- TW-B- 228 091

## Description

The present invention relates to a fastening device, especially to a fastening device for attaching an ignition switch lock to a head pipe of a motorcycle.

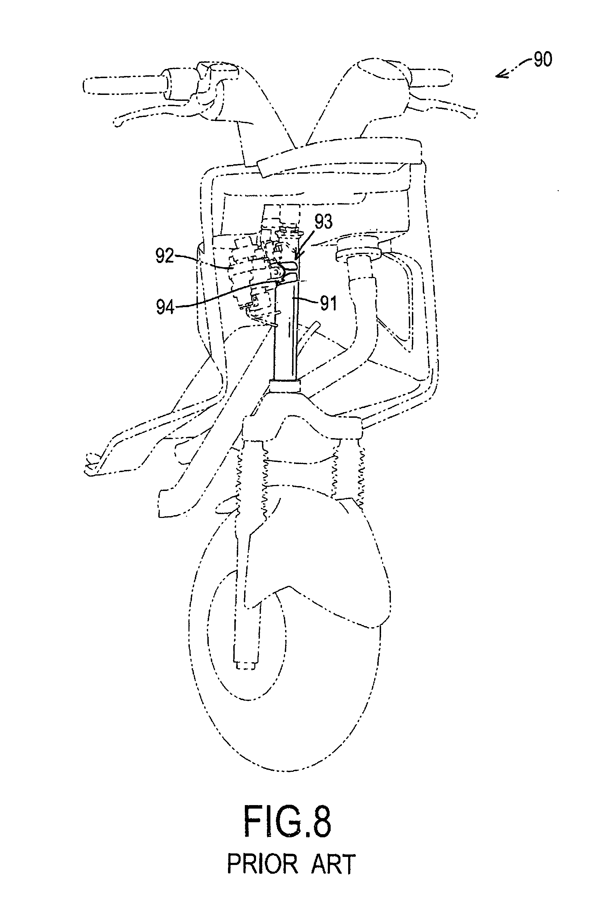

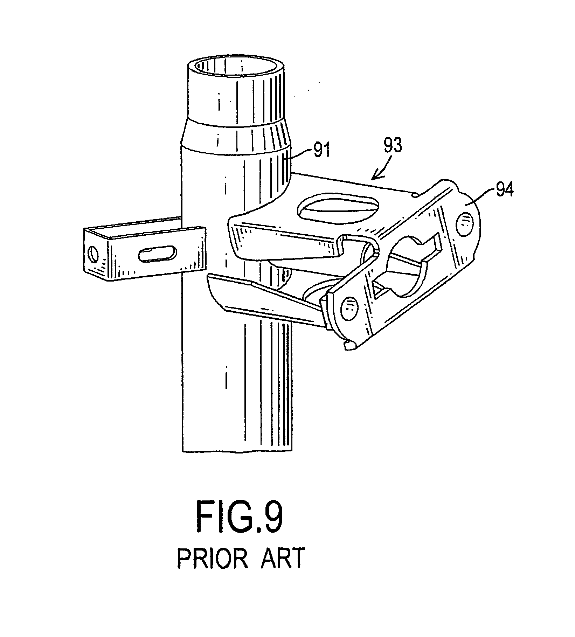

With reference to Fig. 8, a conventional fastening device (93) is used to attach an ignition switch lock (92) of a motorcycle to a head pipe (91) of the motorcycle (90). The fastening device (93) can be fabricated by punching press. With further reference to Fig. 9, the fastening device (93) has a first side mounted on the head pipe (91) and a second side forming a connecting end (94). The connecting end (94) allows the ignition switch lock (92) to be fixed thereon.

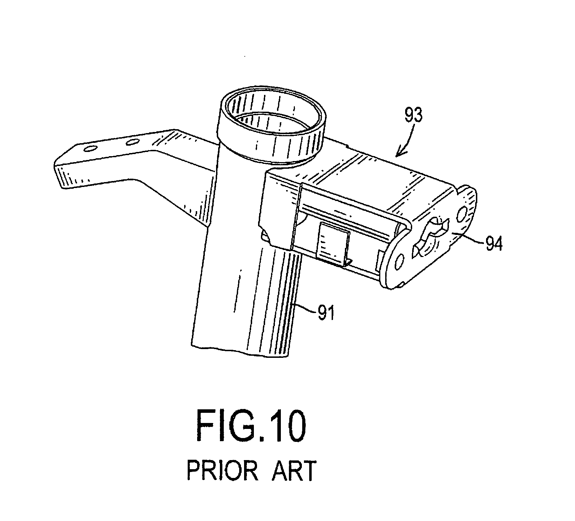

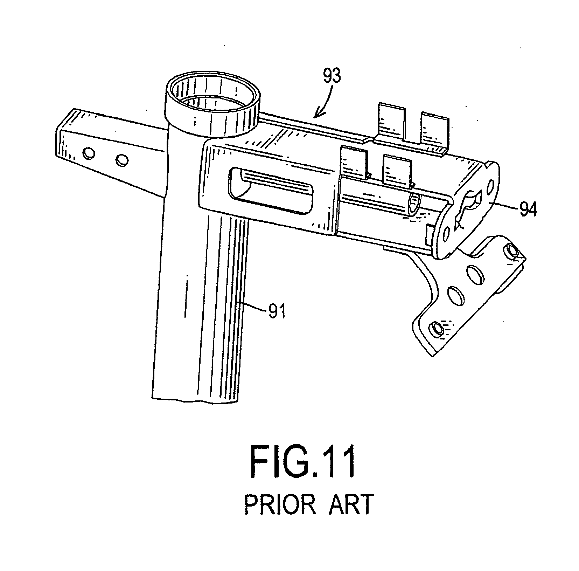

Since motorcycles differ in brand and type, a keyhole of an ignition switch lock may be arranged in different positions of a plastic body shell of the motorcycle. Therefore, the ignition switch lock may be disposed in different positions relative to the head pipe (91) so the fastening device (93) may not be suitable for all types of motorcycles. Once the position of the ignition switch lock is changed, the structure of the fastening device (93) needs to be re-designed, such as the fastening device (93) shown in Figs. 9 to 11.

Designing different kinds of fastening devices that all have guarantees of strong structures is time consuming. When one design is finished, molds for manufacturing the fastening device will also be changed accordingly and manufacturing costs are increased. Hence, manufacturers require a standardized design of the fastening device for different types of motorcycles.

DE-U-202004017996 also discloses a conventional fastening device.

To overcome the shortcomings, the present invention provides a fastening device for an ignition switch look in order to mitigate or obviate the aforementioned problems.

The main objective of the present invention is to provide a fastening device for ignition switch locks that is suitable for different kinds of motorcycles.

The fastening device is adapted to be mounted on a head pipe of a motorcycle for attaching an ignition switch lock to the head pipe and comprises an adjusting member and a connector.

The adjusting member is a hollow tubular body having a proximal end and a distal end. The proximal end is connected to an outer wall of the head pipe.
The connector has a connecting body, a circular recess and a shaft hole. The connecting body has an outer surface adapted to be connected to the ignition switch lock. The circular recess is formed on an inner surface of the connecting body, corresponds to and receives the distal end of the adjusting member. The shaft hole is formed through the outer surface of the connecting body and communicates with the circular recess.

The fastening device can be structurally changed for a specific motorcycle. By adjusting length of the adjusting member, position of the adjusting member relative to the head pipe and angle of the connector, the ignition switch lock can be fixed by the fastening device in a predetermined position based on motorcycle design. Hence, the adjusting member cooperating with the connector can be widely used in many types of motorcycles.
Standardization of the fastening device simplifies motorcycle design and reduces retooling and time costs and associated costs of new motorcycle designs.

Other objectives, advantages and novel features of the invention will become more apparent from the following detailed description when taken in conjunction with the accompanying drawings.

### In the drawings:

Fig. 1 is a partial perspective view of an ignition switch connected to a motorcycle;
Fig. 2 is an operational perspective view of a fastening device mounted on a motorcycle in accordance with the present invention;
Fig. 3 is a perspective view of an embodiment of a fastening device mounted on a head pipe of a motorcycle;
Fig. 4 is a top view of the fastening device in Fig. 3 rotating relative to the head pipe;
Fig. 5 is a side view of the fastening device in Fig. 3 having a rotatable connector;
Fig. 6 is a partial exploded view of another embodiment of a fastening device mounted on a head pipe;
Fig. 7 is a cross sectional view of an adjusting member of a fastening device;
Fig. 8 is an operational view of a conventional fastening device for an ignition switch lock;
Fig. 9 is a perspective view of a conventional fastening device mounted on a head pipe;
Fig. 10 is a perspective view of another conventional fastening device mounted on a head pipe; and
Fig. 11 is a perspective view of still another conventional fastening device mounted on a head pipe.

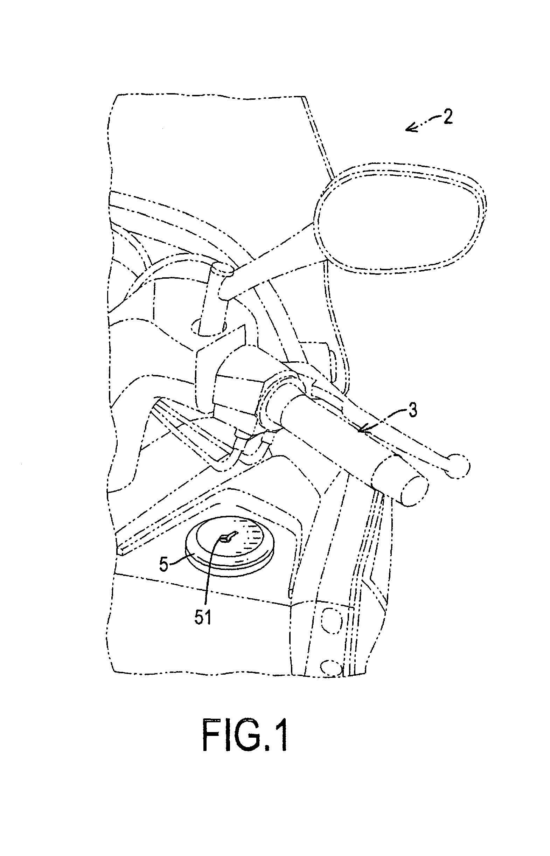

With reference to Fig. 1, a motorcycle (2) may be a motorbike, a scooter, a motorized tricycle or the like and generally has a body shell. The body shell has a mounting hole for mounting an ignition switch lock (5) and revealing a keyhole (51) of the ignition switch lock (5). The mounting hole for the ignition switch lock (5) is often arranged near a handlebar (3) of the motorcycle (2). However, exact position of the mounting hole depends on motorcycle type and design. Therefore, the position of the mounting hole that reveals the keyhole (51) differs.

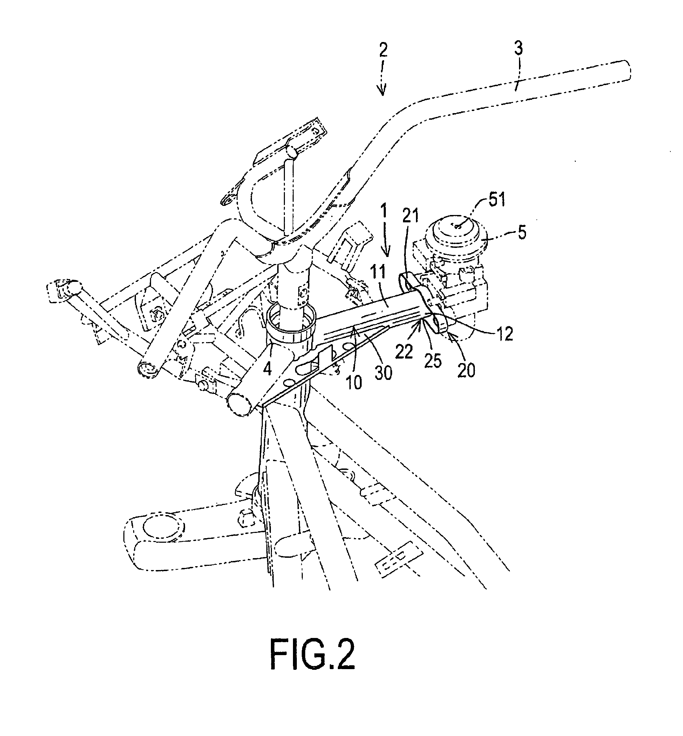

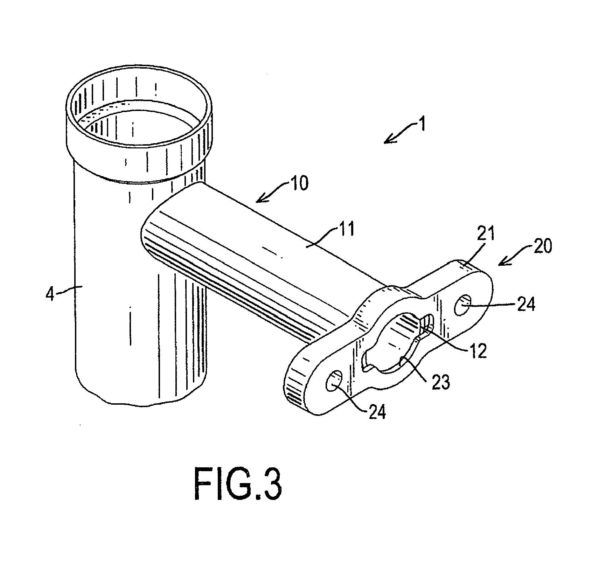

With further reference to Figs. 2 and 3, a fastening device (1) is mounted on a head pipe (4) of the motorcycle (2) for mounting an ignition switch lock (5). The fastening device (1) comprises an adjusting member (10) and a connector (20).

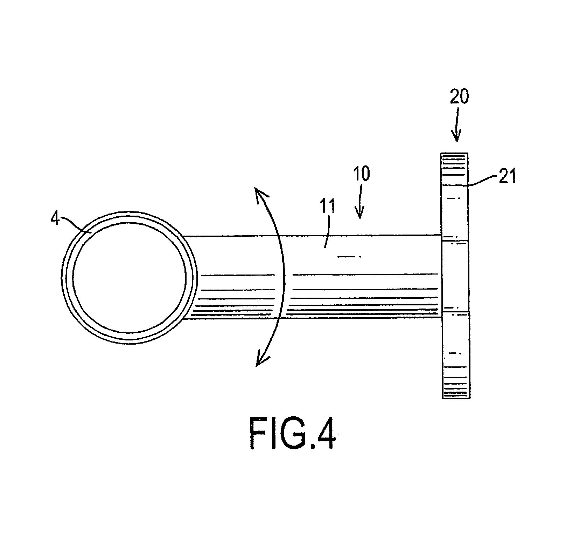

The adjusting member (10) is formed as a hollow tubular body (11). The tubular body (11) has a proximal end, a distal end (12) and an outer sidewall and may be cylindrical. The proximal end is connected to an outer surface of the head pipe (4). The distal end (12) may be circular in cross section. A length of the adjusting member (10) is designed depending on motorcycle type. With further reference to Fig. 4, the position of the adjusting member (10) relative to the head pipe (4) can be changed by rotating the adjusting member (10) before fixing the adjusting member (10) to the head pipe (4).

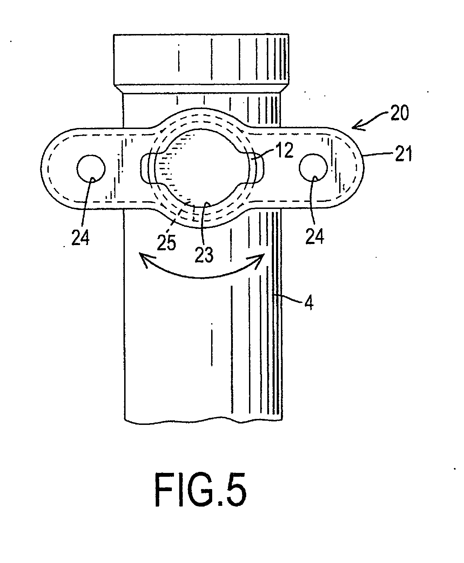

The connector (20) has a connecting body (21), a circular recess (22), a shaft hole (23) and may have two fastening holes (24). The connecting body (21) has an inner surface and an outer surface. The circular recess (22) is formed on the inner surface of the connecting body (21) and corresponds to the distal end (12) of the adjusting member (10). The distal end (12) is adapted to extend into the circular recess (22). With further reference to Fig. 5, angle of the connector (20) can be changed to a desired angle by rotating the connector (20) around an axis of the adjusting member (10) before fixing the connector (20) on the adjusting member (10). The shaft hole (23) is formed through the outer surface of the connecting body (21) and communicates with the circular recess (22). The shaft hole (23) allows insertion of a shaft of the ignition switch leek (5). The fastening holes (24) are formed through the connecting body (21) and respectively disposed on two opposite sides of the shaft hole (23). The ignition switch lock (5) can be fixed to the connector (20) with multiple fasteners mounted through the fastening holes (24).

When the tubular body (11) is cylindrical, the outer sidewall of the tubular body (11) is cambered. The circular recess (22) may have a cambered inner sidewall (25) corresponding to the outer sidewall of the tubular body (11) to facilitate rotation of the connector (20) relative to the adjusting member (10).

The fastening device (1) may further have a reinforcing rib (30) mounted on the outer sidewall of the tubular body (11). The reinforcing rib (30) extends along a direction opposite to the distal end (12) of the tubular body (11). The reinforcing rib (30) connects the adjusting member (10) and a frame of the motorcycle (2), especially the head pipe (4) of the motorcycle (2), to increase a structural stability of the adjusting member (10).

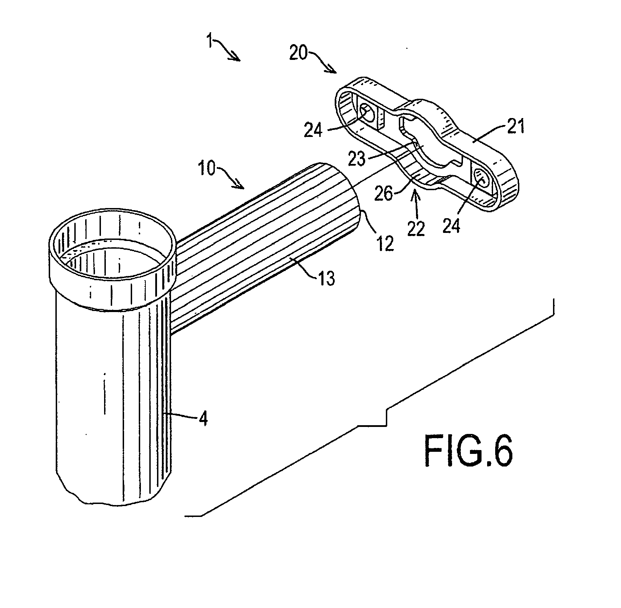

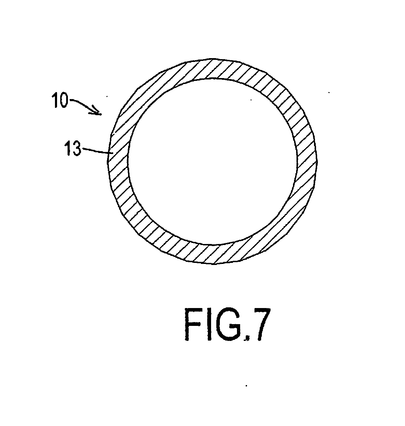

With further reference to Figs. 6 and 7, the tubular body (11) further has multiple cutting surfaces (13). The cutting surfaces (13) of the tubular body (11) are formed circumferentially on the outer sidewall and make the tubular body (11) polygonal in cross section. The circular recess (22) further has multiple cutting surfaces (26) formed on the cambered inner sidewall (25), wherein the cutting surfaces (26) of the circular recess (22) correspond in shape to the cutting surfaces (13) of the tubular body (11). The connector (20) can be rotated around the axis of the adjusting member (10) to a desired angle as well before the connector (20) is fixed to the adjusting member (10). The connector (20) may be fixed to the adjusting member (10) by soldering.

The fastening device (1) can be structurally changed as desired to fix the ignition switch lock (5) in a predetermined position by adjusting the length of the adjusting member (10), the position of the adjusting member (10) relative to the head pipe (4) and the angle of the connector (20). Hence, the fastening device (1) can be widely used in many types of motorcycles. The adjusting member (10) and the connector (20) both have simple structures that simplify the design and reduce the number of the molds used in the manufacturing process. Therefore, retooling costs can be reduced. Furthermore, since the fastening device (1) uses the adjusting member (10) and the connector (20) to achieve design standardization and further reduce lead times and associated costs of new motorcycle designs.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the scope of the invention defined by the appended claims.

## Claims

1. A fastening device (1) adapted to be mounted on a head pipe (4) of a motorcycle (2) for attaching an ignition switch lock (5) to the head pipe (4), the fastening device (1) having an adjusting member (10) formed on the head pipe (4), the adjusting member (10) formed as a hollow tubular body (11) having a proximal end, a distal end (12) and an outer sidewall, the proximal end connected to an outer wall of the head pipe (4), **characterized by** comprising:
a connector (20) having
a connecting body (21) having an inner surface and an outer surface, said outer surface being adapted to be connected to the ignition switch lock (5);
a circular recess (22) formed on the inner surface of the connecting body (21),
corresponding to and receiving the distal end (12) of the adjusting member (10); and
a shaft hole (23) formed through the outer surface of the connecting body (21) and communicating with the circular recess (22).

2. The fastening device as claimed in claim 1, wherein the connector (20) further has two fastening holes (24) formed through the connecting body (21) and respectively disposed on two opposite sides of the shaft hole (23).

3. The fastening device as claimed in claim 1, wherein
the tubular body (11) is cylindrical;
the outer sidewall of the tubular body (11) is cambered; and
the circular recess (22) has a cambered inner sidewall (25) corresponding to the outer sidewall of the tubular body (11).

4. The fastening device as claimed in claim 2, wherein
the tubular body (11) is cylindrical;
the outer sidewall of the tubular body (11) is cambered; and
the circular recess (22) has a cambered inner sidewall (25) corresponding to the outer sidewall of the tubular body (11).

5. The fastening device as claimed in claim 1, wherein
the tubular body (11) further has multiple cutting surfaces (13) formed circumferentially on the outer sidewall of the tubular body (11); and
the circular recess (22) has a cambered inner sidewall (25) and multiple cutting surfaces (26) formed on the cambered inner sidewall (25), wherein the cutting surfaces (26) of the circular recess (22) correspond to the cutting surfaces (13) of the tubular body (11).

6. The fastening device as claimed in claim 2, wherein
the tubular body (11) further has multiple cutting surfaces (13) formed circumferentially on the outer sidewall of the tubular body (11); and
the circular recess (22) has a cambered inner sidewall (25) and multiple cutting surfaces (26) formed on the cambered inner sidewall (25), wherein the cutting surfaces (26) of the circular recess (22) correspond to the cutting surfaces (13) of the tubular body (11).

7. The fastening device as claimed in any one of claims 1 to 6 further has a reinforcing rib (30) mounted on the outer sidewall of the tubular body (11), wherein the reinforcing rib (30) extends along a direction opposite to the distal end (12) of the tubular body (11).

8. The fastening device as claimed in claim 7, wherein the reinforcing rib (30) connects the adjusting member (10) and the head pipe (4) of the motorcycle (2).

## Patentansprüche

1. Befestigungsvorrichtung (1), die dafür eingerichtet ist, an einem Steuerrohr (4) eines Motorrades (2) angebracht zu werden, um ein Zündschalterschloss (5) an dem Steuerrohr (4) zu befestigen, wobei die Befestigungsvorrichtung (1) ein Einstellelement (10) hat, das an dem Steuerrohr (4) geformt ist, wobei das Einstellelement (10) als ein hohler röhrenförmiger Korpus (11) geformt ist, der ein proximales Ende, ein distales Ende (12) und eine äußere Seitenwand hat, wobei das proximale Ende mit einer Außenwand des Steuerrohres (4) verbunden ist, **dadurch gekennzeichnet, dass** sie Folgendes umfasst:
einen Verbinder (20), der Folgendes hat:
einen Verbindungskorpus (21), der eine Innenfläche und eine Außenfläche hat, wobei die Außenfläche dafür eingerichtet ist, mit dem Zündschalterschloss (5) verbunden zu werden,
eine kreisförmige Aussparung (22), die an der Innenfläche des Verbindungskorpus (21) geformt ist, wobei sie dem distalen Ende (12) des Einstellelements (10) entspricht und dasselbe aufnimmt, und
ein Schaftloch (23), das durch die Außenfläche des Verbindungskorpus (21) geformt und mit der kreisförmigen Aussparung (22) verbunden ist.

2. Befestigungsvorrichtung nach Anspruch 1, wobei der Verbinder (20) ferner zwei Befestigungslöcher (24) hat, die durch den Verbindungskorpus (21) geformt und jeweils auf zwei entgegengesetzten Seiten des Schaftlochs (23) angeordnet sind.

3. Befestigungsvorrichtung nach Anspruch 1, wobei:
der röhrenförmige Korpus (11) zylindrisch ist,
die äußere Seitenwand des röhrenförmigen Korpus (11) gewölbt ist und
die kreisförmige Aussparung (22) eine gewölbte innere Seitenwand (25) hat, die der äußeren Seitenwand des röhrenförmigen Korpus (11) entspricht.

4. Befestigungsvorrichtung nach Anspruch 2, wobei:
der röhrenförmige Korpus (11) zylindrisch ist,
die äußere Seitenwand des röhrenförmigen Korpus (11) gewölbt ist und
die kreisförmige Aussparung (22) eine gewölbte innere Seitenwand (25) hat, die der äußeren Seitenwand des röhrenförmigen Korpus (11) entspricht.

5. Befestigungsvorrichtung nach Anspruch 1, wobei:
der röhrenförmige Korpus (11) ferner mehrere Schneidflächen (13) hat, die umlaufend an der äußeren Seitenwand des röhrenförmigen Körpers (11) geformt sind, und
die kreisförmige Aussparung (22) eine gewölbte innere Seitenwand (25) und mehrere Schneidflächen (26), die an der gewölbten inneren Seitenwand (25) geformt sind, hat, wobei die Schneidflächen (26) der kreisförmigen Aussparung (22) den Schneidflächen (13) des röhrenförmigen Korpus (11) entsprechen.

6. Befestigungsvorrichtung nach Anspruch 2, wobei:
der röhrenförmige Korpus (11) ferner mehrere Schneidflächen (13) hat, die umlaufend an der äußeren Seitenwand des röhrenförmigen Körpers (11) geformt sind, und
die kreisförmige Aussparung (22) eine gewölbte innere Seitenwand (25) und mehrere Schneidflächen (26), die an der gewölbten inneren Seitenwand (25) geformt sind, hat, wobei die Schneidflächen (26) der kreisförmigen Aussparung (22) den Schneidflächen (13) des röhrenförmigen Korpus (11) entsprechen.

7. Befestigungsvorrichtung nach einem der Ansprüche 1 bis 6, der ferner eine Verstärkungsrippe (30) umfasst, die an der äußeren Seitenwand des röhrenförmigen Korpus (11) angebracht ist, wobei sich die Verstärkungsrippe (30) längs einer Richtung, entgegengesetzt zu dem distalen Ende (12) des röhrenförmigen Korpus (11), erstreckt.

8. Befestigungsvorrichtung nach Anspruch 7, wobei die Verstärkungsrippe (30) das Einstellelement (10) und das Steuerrohr (4) des Motorrades (2) verbindet.

## Revendications

1. Dispositif de fixation (1) adapté pour être monté sur un tube avant (4) d'une motocyclette (2) pour fixer un verrou de commutateur d'allumage (5) sur le tube avant (4), le dispositif de fixation (1) comportant un élément de réglage (10) formé sur le tube avant (4), l'élément de réglage (10) ayant la forme d'un corps tubulaire creux (11) ayant une extrémité proximale, une extrémité distale (12) et une paroi latérale extérieure, l'extrémité proximale étant connectée à une paroi extérieure du tube avant (4), **caractérisé en ce qu'**il comprend :
un connecteur (20) comportant :
un corps de connexion (21) ayant une surface intérieure et une surface extérieure, ladite surface extérieure étant adaptée pour être connectée au verrou de commutateur d'allumage (5) ;
un évidement circulaire (22) formé sur la surface intérieure du corps de connexion (21), correspondant avec et recevant l'extrémité distale (12) de l'élément de réglage (10) ; et
un trou d'axe (23) pratiqué dans la surface extérieure du corps de connexion (21) et communiquant avec l'évidement circulaire (22).

2. Dispositif de fixation selon la revendication 1, dans lequel le connecteur (20) comporte en outre deux trous de fixation (24) pratiqués dans le corps de connexion (21) et disposés respectivement sur deux côtés opposés du trou d'axe (23).

3. Dispositif de fixation selon la revendication 1, dans lequel :
le corps tubulaire (11) est cylindrique ;
la paroi latérale extérieure du corps tubulaire (11) est cambrée ; et
l'évidement circulaire (22) a une paroi latérale intérieure cambrée (25) en correspondance avec la paroi latérale extérieure du corps tubulaire (11).

4. Dispositif de fixation selon la revendication 2, dans lequel :
le corps tubulaire (11) est cylindrique ;
la paroi latérale extérieure du corps tubulaire (11) est cambrée ; et
l'évidement circulaire (22) a une paroi latérale intérieure cambrée (25) en correspondance avec la paroi latérale extérieure du corps tubulaire (11).

5. Dispositif de fixation selon la revendication 1, dans lequel :
le corps tubulaire (11) comporte en outre de multiples surfaces découpées (13) formées circonférentiellement sur la paroi latérale extérieure du corps tubulaire (11) ; et
l'évidement circulaire (22) a une paroi latérale intérieure cambrée (25) et de multiples surfaces découpées (26) formées sur la paroi latérale intérieure cambrée (25), les surfaces découpées (26) de l'évidement circulaire (22) étant en correspondance avec les surfaces découpées (13) du corps tubulaire (11).

6. Dispositif de fixation selon la revendication 2, dans lequel :
le corps tubulaire (11) comporte en outre de multiples surfaces découpées (13) formées circonférentiellement sur la paroi latérale extérieure du corps tubulaire (11) ; et
l'évidement circulaire (22) a une paroi latérale intérieure cambrée (25) et de multiples surfaces découpées (26) formées sur la paroi latérale intérieure cambrée (25), les surfaces découpées (26) de l'évidement circulaire (22) étant en correspondance avec les surfaces découpées (13) du corps tubulaire (11).

7. Dispositif de fixation selon l'une quelconque des revendications 1 à 6, comportant en outre une nervure de renforcement (30) montée sur la paroi latérale extérieure du corps tubulaire (11), la nervure de renforcement (30) s'étendant le long d'une direction opposée à l'extrémité distale (12) du corps tubulaire (11).

8. Dispositif de fixation selon la revendication 7, dans lequel la nervure de renforcement (30) relie l'élément de réglage (10) au tube avant (4) de la motocyclette (2).
